Europäisches Patentamt

European Patent Office

Office européen des brevets

(19)

(11) EP 1 333 593 A1

(12) **EUROPEAN PATENT APPLICATION**

(43) Date of publication:
06.08.2003 Bulletin 2003/32

(51) Int Cl.⁷: **H04B 3/54**

(21) Application number: 02010113.5

(22) Date of filing: 08.05.2002

(84) Designated Contracting States:
**AT BE CH CY DE DK ES FI FR GB GR IE IT LI LU MC NL PT SE TR**
Designated Extension States:
**AL LT LV MK RO SI**

(30) Priority: **24.01.2002 JP 2002015098**

(71) Applicant: **FUJITSU LIMITED**
**Kawasaki-shi, Kanagawa 211-8588 (JP)**

(72) Inventors:
• **Kaku, Takashi, C/O Fujitsu Limited**
**Kawasaki-shi, Kanagawa 211-8588 (JP)**
• **Murata, Hiroyasu, c/o Fujitsu Limited**
**Kawasaki-shi, Kanagawa 211-8588 (JP)**

(74) Representative: **HOFFMANN - EITLE**
**Patent- und Rechtsanwälte**
**Arabellastrasse 4**
**81925 München (DE)**

(54) **Power line transmission technical**

(57) A method of suppressing leakage electromagnetic fields on a communication line or a power line having reflected waves includes the steps of (a) transmitting a first impulse from a transmission end and (b) transmitting a second impulse from the transmission end after passage of a given period of time during which a reflected wave of the first impulse disappears before returning to the transmission end. Thereby, the leakage electromagnetic fields are minimized.

FIG.9

**Description**

BACKGROUND OF THE INVENTION

1. Field of the Invention

The present invention generally relates to methods of suppressing leakage electromagnetic fields and transmission methods and apparatuses suppressing leakage electromagnetic fields, and more particularly to a method of suppressing leakage electromagnetic fields and a transmission method and apparatus suppressing leakage electromagnetic fields which methods and apparatus are applied to a power line communication modem for performing high-speed data communication by using a power line, and reduce undesired radio waves that interfere with other receivers by suppressing leakage electromagnetic fields (electromagnetic waves) radiated from the power line in signal transmission.

2. Description of the Related Art

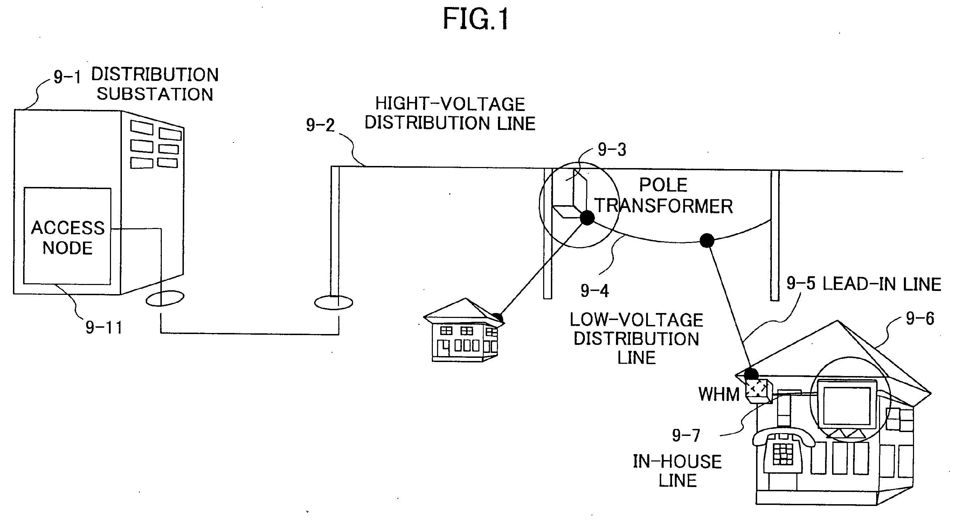

FIG. 1 is a diagram showing a configuration of a power line communication (PLC) system. As shown in FIG. 1, a power line is composed of a 6.6 kV high-voltage distribution line 9-2 provided between a distribution substation 9-1 and a pole transformer 9-3, and a 100/200 V low-voltage distribution line 9-4 and a lead-in line 9-5 provided between the pole transformer 9-3 and a house 9-6.

According to the PLC system, an optical signal is transmitted through optical fibers provided in parallel with the high-voltage distribution line 9-3 between an access node 9-11 of the distribution substation 9-1 and a modem inside the pole transformer 9-3, and a communication signal is transmitted through the low-voltage distribution line 9-4, the lead-in line 9-5, and an in-house line 9-7 between the pole transformer 9-3 and a modem plugged in an outlet inside the house 9-6.

A large number of household appliances are connected to the low-voltage distribution line 9-4, the lead-in line 9-5, and the in-house line 9-7. Random noises are emitted from the switching power supplies and the inverter circuits of the household appliances so that transmission quality is deteriorated by such large noises. Accordingly, PLC employs modulation methods believed to have great noise immunity, such as frequency modulation, frequency shift keying (FSK), phase shift keying (PSK), and spread spectrum. Alternatively, a technique to perform communication without using a carrier band containing a high level of noise, such as multi-carrier modulation or orthogonal frequency division multiplexing (OFDM), is applied to PLC.

According to the above-described PLC system, such large leakage electromagnetic fields are radiated from the power line in signal transmission that there is a high probability that other communication or broadcasting media are greatly affected by the leakage electromagnetic fields. It is even said that there is a possibility of causing such great noise in short-wave broadcasting receivers that the contents of broadcasting are hardly audible.

In order to reduce such leakage electromagnetic field waves, it is required to lower the transmission level of the PLC system. However, if the transmission level is lowered, the communication quality of the PLC system is remarkably deteriorated by noise radiated from the switching power supplies and the inverter circuits of household appliances.

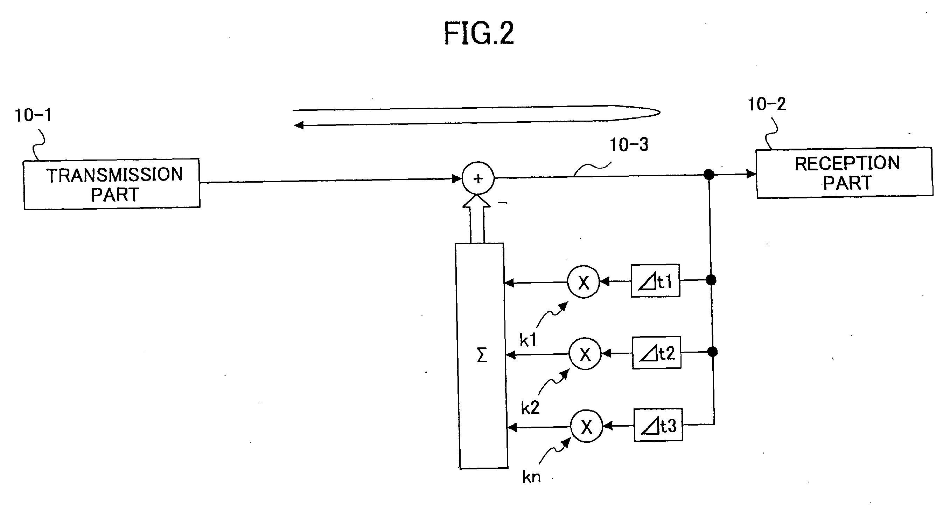

Further, there are branch points throughout the power line so that multiple paths are generated. As a result, a transmission signal of a certain frequency is reflected back from a branch point to the transmitter side with its phase reversed. FIG. 2 is a diagram showing an equivalent circuit of a power line in which reflected waves are . generated due to multiple paths. In FIG. 2, a transmission part 10-1 of the modem of a pole transformer and a reception part 10-2 of a modem provided inside a house are connected by a power line 10-3 including a large number of branch points.

N (integer: n > 1) reflected waves from the branch points return to the transmission part 10-1 side of the power line 10-3 to be combined after respective delay times $\Delta t1$ through $\Delta tn$ pass. In a transmission signal of a certain frequency, a point at which the reflected waves and the transmission wave are superimposed on each other to make voltage zero, that is, a point at which impedance is made zero, is generated. At that point, a large signal current flows so that large leakage electromagnetic field waves are generated.

Further, in the PLC system, the low-voltage distribution line is an inductor and the lead-in line and the in-house line connected to the low-voltage distribution line are capacitors to the pole transformer. The household appliances connected to the in-house line each has a capacitor for noise prevention connected between the AC 100 V lines so as to present a large capacitive load.

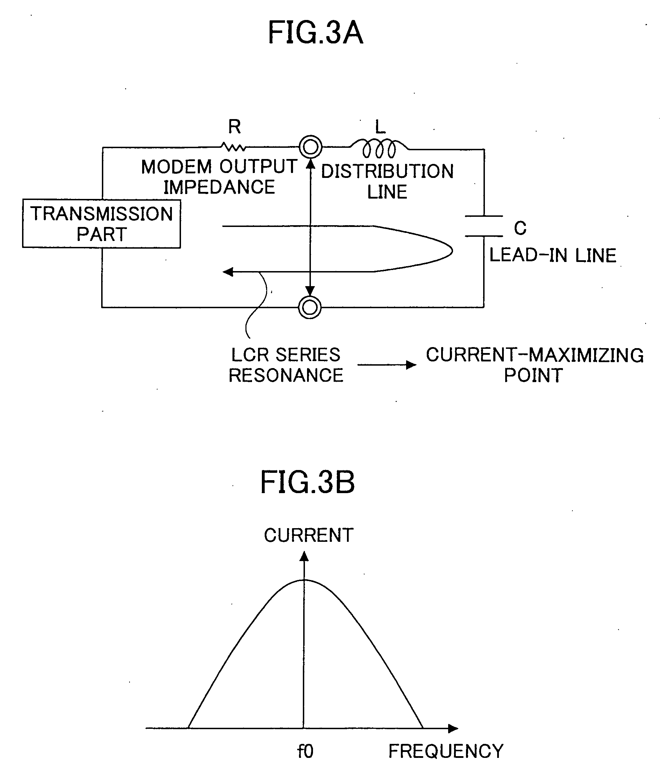

Therefore, the power line is a series resonance circuit of R, L, and C including the output impedance of the modem of the pole transformer when viewed from the pole transformer. FIG. 3A is a diagram showing an equivalent circuit of the power line viewed from the pole transformer. FIG. 3B is a diagram showing the frequency characteristic of a signal current flowing through the power line.

In FIG. 3A, R indicates the output impedance of the modem of the pole transformer, L indicates the inductance of the low-voltage distribution line, and C indicates the capacitance of the lead-in line and the in-house line. R, L, and C form the series resonance circuit. Therefore, the impedance of the circuit is minimized at a resonant frequency $f0 = 1/\{2\pi\sqrt{(LC)}\}$, so that a signal of this frequency causes a large current to flow as shown in FIG. 3B, thereby generating large leakage electromagnetic field waves.

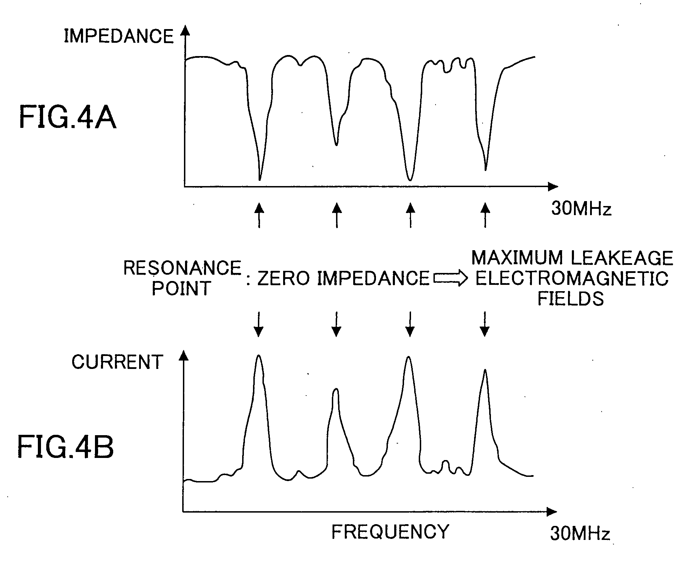

Further, the power line becomes a distributed constant circuit, so that a plurality of series resonance circuits of different resonant frequencies are formed by branch lines. FIGS. 4A and 4B are diagrams showing how the impedance and the flowing current vary with respect to the frequency, respectively, so that a plurality of resonance points are generated in the frequency band of the transmission signal. As shown in FIGS. 4A and 4B, the impedance is minimized, while the current is maximized at some resonance points, where large leakage electromagnetic field waves are generated.

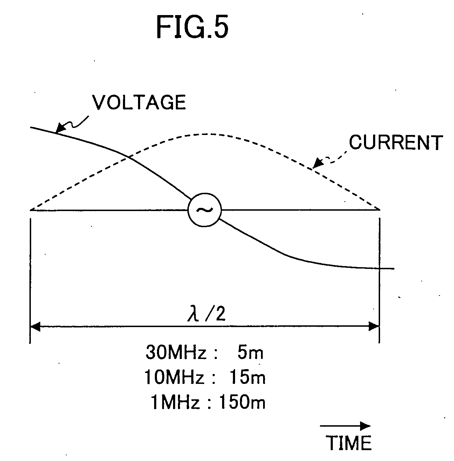

Further, the branch lines of the power line serve as antennas. In the case of a resonant frequency of 30 MHz, for instance, the wave transmission velocity is $3 \times 10^8$ [m/s], so that the wavelength is 10 m. Accordingly, a node at which the current or voltage is maximized is generated every line length of a half wavelength of 5 m as shown in FIG. 5.

Resonance is also achieved at frequencies that are integral multiples of the resonant frequency. Large leakage electromagnetic fields are generated at each half wavelength point of each of the frequencies. Since household appliances have capacitive loads, large leakage electromagnetic fields are generated at each half wavelength point of each of frequencies higher than or equal to approximately 100 kHz.

SUMMARY OF THE INVENTION

It is a general object of the present invention to provide a method of suppressing leakage electromagnetic fields and a transmission method and apparatus suppressing leakage electromagnetic fields by which the above-described disadvantage is eliminated.

A more specific object of the present invention is to provide a method of suppressing leakage electromagnetic fields and a transmission method and apparatus suppressing leakage electromagnetic fields that prevent generation of large electromagnetic fields due to a large current flow caused by interference by reflected waves or intersymbol interference in signal transmission using a communication line where reflected waves are generated, such as a power line, a telephone line, or a coaxial transmission line.

The above objects of the present invention are achieved by a method of suppressing leakage electromagnetic fields on a communication line or a power line having reflected waves generated thereon, the method including the steps of (a) transmitting a first impulse from a transmission end and (b) transmitting a second impulse from the transmission end after passage of a given period of time during which a reflected wave of the first impulse disappears before returning to the transmission end, whereby the leakage electromagnetic fields are minimized.

According to the above-described method, impulses are transmitted at intervals so as to avoid interference by reflected waves and intersymbol interference, thereby preventing generation of large leakage electromagnetic fields due to such interference.

The above objects of the present invention are also achieved by a method of suppressing leakage electromagnetic fields on a communication line or a power line having reflected waves generated thereon, the method including the steps of (a) transmitting a first impulse and (b) transmitting a second impulse having a phase 180° different from that of the first impulse immediately after the first impulse is transmitted in the step (a), whereby a signal is transmitted.

According to the above-described method, the signal is transmitted by transmitting, immediately after the first impulse is transmitted, the second impulse whose phase is 180° different from that of the first impulse so that the reflected waves of the first and second impulses have opposite polarities to cancel each other, thereby suppressing the leakage electromagnetic fields.

The above objects of the present invention are also achieved by a transmission method suppressing leakage electromagnetic fields in power line communication transmitting a signal by using a power line, wherein first and second impulse signals are transmitted from a transmission apparatus at a time interval of an impulse response waveform of the power line so as to prevent the second impulse signal and a reflected wave of the first impulse signal from being combined on the power line at an output end of the transmission apparatus, the second impulse signal corresponding to data to be transmitted next to that of the first impulse signal.

According to the above-described transmission method, the first and second impulse signals are transmitted at the time interval of the impulse response waveform of the power line so as to avoid interference by the reflected waves and intersymbol interference, thereby preventing generation of large leakage electromagnetic fields due to such interference.

The above objects of the present invention are also achieved by a transmission method suppressing leakage electromagnetic fields in power line communication transmitting a signal by using a power line, wherein the signal is transmitted from a transmission apparatus to the power line through a filter having a transfer function that is an inverse function to a transfer function of the power line so as to prevent the transmitted signal and reflected waves thereof from being combined on the power line at an output end of the transmission apparatus.

According to the above-described transmission method, the reflected waves have opposite polarities to cancel each other, thereby suppressing the leakage electromagnetic fields.

The above objects of the present invention are also achieved by a transmission apparatus suppressing leakage electromagnetic fields in power line communication transmitting a signal by using a power line, the transmission apparatus including a signal generation part generating and transmitting first and second impulse signals at a time interval of an impulse response waveform of the power line so as to prevent the second impulse signal and a reflected wave of the first impulse signal from being combined on the power line at an output end of the transmission apparatus, the second impulse signal corresponding to data to be transmitted next to that of the first impulse signal.

According to the above-described transmission apparatus, the first and second impulse signals are transmitted at the time interval of the impulse response waveform of the power line so as to avoid interference by the reflected waves and intersymbol interference, thereby preventing generation of large leakage electromagnetic fields due to such interference.

The above objects of the present invention are further achieved by a transmission apparatus suppressing leakage electromagnetic fields in power line communication transmitting a signal by using a power line, the transmission apparatus including a filter having a transfer function that is an inverse function to a transfer function of the power line so as to prevent the transmitted signal and reflected waves thereof from being combined on the power line at an output end of the transmission apparatus, wherein the signal is transmitted from the transmission apparatus to the power line through said filter.

According to the above-described transmission apparatus, the reflected waves have opposite polarities to cancel each other, thereby suppressing the leakage electromagnetic fields.

BRIEF DESCRIPTION OF THE DRAWINGS

Other objects, features and advantages of the present invention will become more apparent from the following detailed description when read in conjunction with the accompanying drawings, in which:

FIG. 1 is a diagram showing a configuration of a power line communication (PLC) system;
FIG. 2 is a diagram showing an equivalent circuit of a power line employed in the PLC system in which power line reflected waves are generated due to multiple paths;
FIG. 3A is a diagram showing an equivalent circuit of the power line viewed from a pole transformer of the PLC system, and FIG. 3B is a diagram showing a frequency characteristic of a signal current flowing through the power line;
FIGS. 4A and 4B are diagrams showing how a plurality of resonance points are generated in a frequency band of a transmission signal on the power line;
FIG. 5 is a diagram showing how a node at which a current or a voltage is maximized is generated on the power line;
FIGS. 6A through 6D are diagrams for illustrating transmission of signals at impulse response intervals according to the present invention;
FIG. 7 is a diagram for illustrating insertion of zero points between the signals according to the present invention;
FIG. 8 is a timing chart of signals for illustrating transmission of impulses whose phases are 180° different from each other according to the present invention;
FIG. 9 is a block diagram showing a configuration of a modem according to a first embodiment of the present invention;
FIGS. 10A through 10C are diagrams for illustrating generation of signal points in the transmission of the signals according to the first embodiment;
FIG. 11 is a diagram for illustrating cancellation of reflected waves according to a second embodiment of the present invention;
FIG. 12 is a block diagram showing a configuration of a modem according to the second embodiment; and
FIG. 13 is a diagram for illustrating orthogonal frequency division multiplexing (OFDM).

DETAILED DESCRIPTION OF THE PREFERRED EMBODIMENTS

A description will now be given, with reference to the accompanying drawings, of embodiments of the present invention.

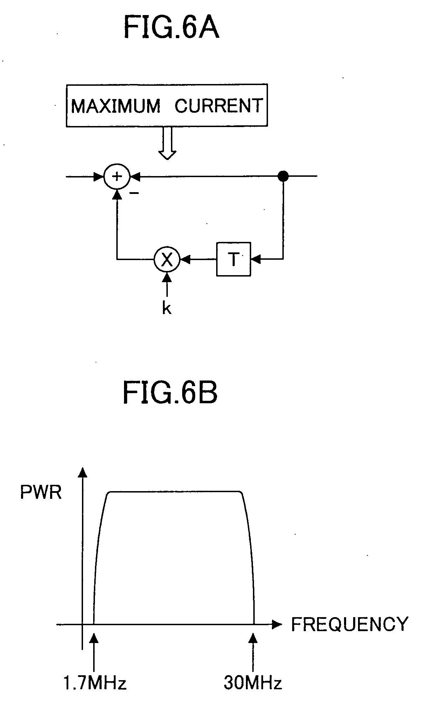

A description will first be given, with reference to FIGS. 6A through 6D, of a transmission apparatus suppressing leakage electromagnetic fields according to the present invention. Due to branch lines, the equivalent circuit of a power line is as shown in FIG. 6A. Signals transmitted sequentially through the power line are combined with antiphase reflected waves thereof reflected and returned from branch points so as to maximize a current at some points. The maximum width (time interval) of the impulse response waveform of such a power line is approximately 2 $\mu$s.

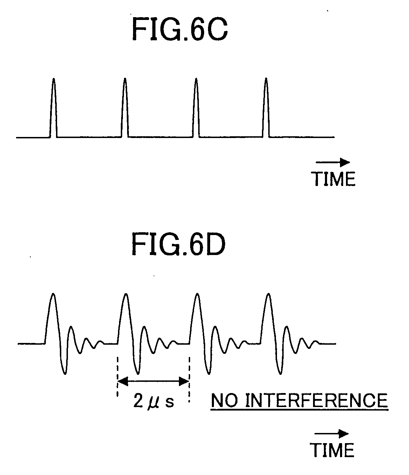

Here, impulses corresponding to transmission data are transmitted at intervals of 2 $\mu$s as shown in FIG. 6C in a transmission band from 1.7 to 30 MHz as shown in FIG. 6B. This prevents interference by antiphase reflected waves as shown in FIG. 6D. Accordingly, the transmitted impulses are prevented from being superimposed on the interference waves, thus in no case making voltage zero. That is, a large current is prevented from flowing through the power line. Thereby, leakage electromagnetic fields can be suppressed.

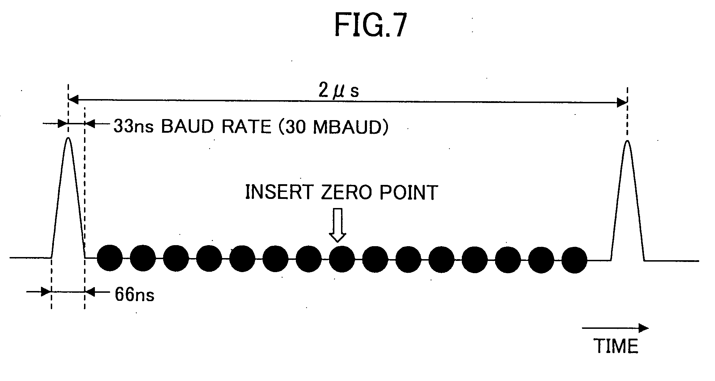

Further, as shown in FIG. 7, impulses are transmitted according to the Nyquist theorem in a broad bandwidth provided to the power line for 30 Mbaud, for instance, at intervals each corresponding to the width of the impulse response waveform of the power line (approximately 2 $\mu$s) so that impulse responses are prevented from being superimposed on the transmitted impulses, with zero points being inserted at Nyquist interval positions (at intervals of approximately 33 ns, for instance) between each two impulses. Thereby, interference by the reflected waves and intersymbol interference are suppressed, and a large current flow due to the interference is avoided. Thus, the leakage electromagnetic fields can be reduced.

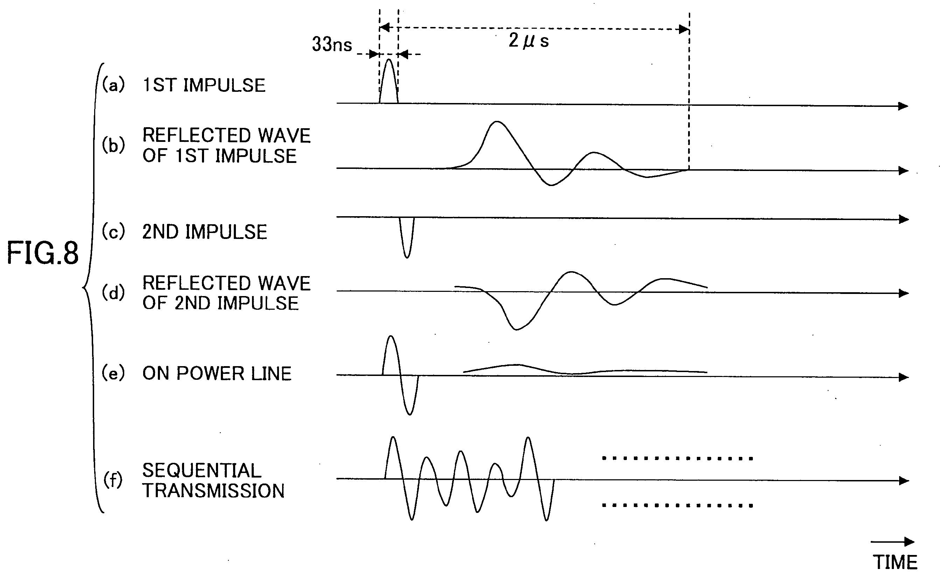

Further, by transmitting a signal by transmitting, immediately after a first impulse is transmitted, a second impulse whose phase is 180° different from that of the first impulse, the reflected waves can be reduced so that the leakage electromagnetic fields can be suppressed. FIG. 8 is a timing chart of signals for illustrating how the leakage electromagnetic fields are suppressed.

In FIG. 8, when the first impulse is transmitted as indicated by (a), the reflected wave of the first impulse returns as indicated by (b). Then, the second impulse, whose phase is 180° different from that of the first impulse, is transmitted immediately after the transmission of the first impulse as indicated by (c) of FIG. 8, so that the reflected wave of the second impulse, whose waveform is the reversal of that of the reflected wave of the first impulse as indicated by (d) of FIG. 8), is returned.

On the power line, as indicated by (e) of FIG. 8, the reflected waves of the first and second impulses, whose waveforms are reverse to each other, cancel each other, so that the leakage electromagnetic fields due to the reflected waves can be reduced. In FIG. 8, (f) indicates a waveform at a time of sequentially transmitting impulses in such a way that an impulse has a phase 180° different from that of a preceding impulse transmitted immediately before the impulse. In this case, waveform polarity switches between each two successive impulses so that the waveforms of each two successive impulses also cancel each other. Thereby, the leakage electromagnetic fields can be reduced.

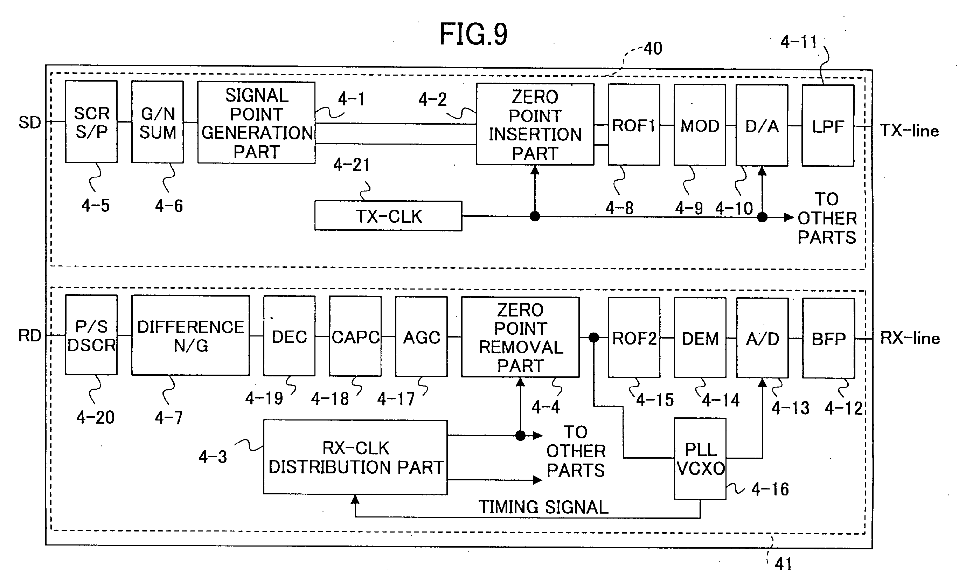

FIG. 9 is a block diagram showing a configuration of a modem in a pole transformer according to a first embodiment of the present invention. The modem transmits impulses at intervals corresponding to impulse response intervals. The modem includes a transmission part 40 and a reception part 41. In the transmission part 40 of the modem of FIG. 9, a scrambler (SCR·S/P) 4-5 scrambles a transmission signal (SD), converts the serial signal into a parallel signal, and transmits the converted signal to a vector sum circuit (G/N·sum) 4-6.

The vector sum circuit 4-6 converts the input parallel signal, which is Gray binary code data (G), into natural binary code (N). Further, after performing vector sum calculation corresponding to a vector difference circuit (difference·N/G) 4-7 for phase detection on the receiver side, the vector sum circuit 4-6 transmits the signal to a signal point generation part 4-1.

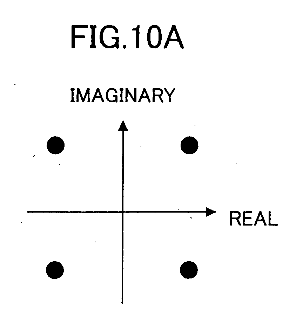

The signal point generation part 4-1 divides the transmission data into modulation units each of a given number of bits, and generates one of signal points corresponding to the number of bits with respect to each modulation unit. For instance, in the case of dividing the data into two-bit modulation unit, the signal point generation part 4-1 generates one of $2^2 = 4$ signal points with respect to each modulation unit as shown in FIG. 10A.

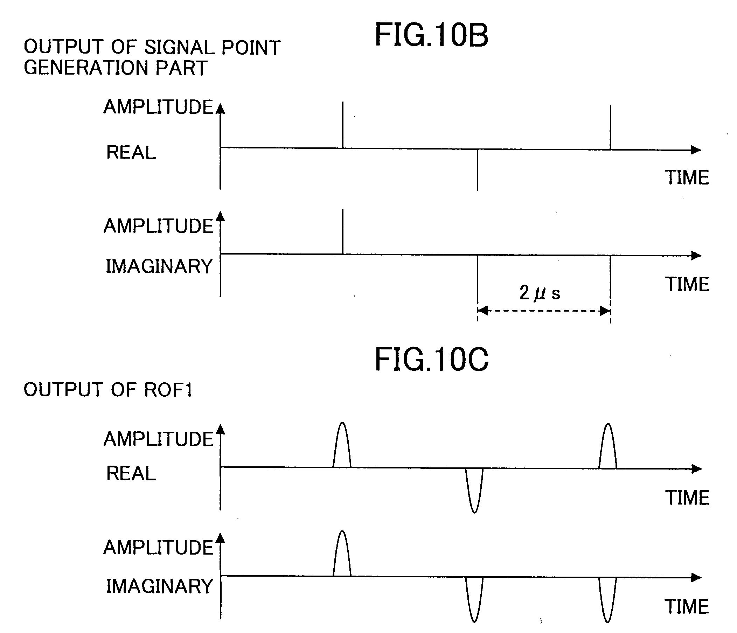

As shown in FIG. 10B, the signal points are generated as impulses each of real and imaginary components at intervals each of a time length long enough for the reflected waves of the impulses to disappear (for instance, 2 μs). After a zero-point insertion part 4-2 inserts zero-point signals between the transmitted signal and the next signal, a first rolloff filter (ROF1) 4-8 restricts the transmission band to a band permitted to PLC and performs waveform shaping. Thereby, the transmission signal is output as shown in FIG. 10C.

A modulation circuit (MOD) 4-9 modulates the transmission signal. Then, the transmission signal is converted from a digital signal to an analog signal in a digital-to-analog converter circuit (D/A) 4-10. Thereafter, a low-pass filter (LPF) extracts a signal of a low-frequency band including the frequency band of a PLC carrier wave from the transmission signal, and transmits the extracted signal to a transmission line TX-line. The signal transmitted from the transmission line TX-line is received through a reception line RX-line by an opposing modem. In the reception part 41 of the opposing modem, a band-pass filter (BPF) 4-12 extracts a component of a given frequency band from the received signal, and an analog-to-digital converter circuit (A/D) 4-13 converts the extracted signal component back into a digital signal.

A demodulation circuit (DEM) 4-14 demodulates this digitized analog signal to a baseband signal. A second rolloff filter (ROF2) 4-15 performs waveform shaping on the signal, and outputs the signal to a phase-locked loop circuit 4-16 of a voltage-controlled crystal oscillator type (PLL·VCXO).

The PLL circuit 4-16 extracts the phase of each zero point from the signal and supplies the phase of each zero point to the A/D converter circuit 4-13 as a sampling timing signal and to a reception clock (RX-CLK) distribution part 4-3 of the reception part 41 as a reception clock signal.

After a zero point removal part 4-4 removes the zero points from the output signal of the second rolloff filter 4-15 of the reception part 41, an automatic gain controller (AGC) 4-17 performs gain control on the output signal of the zero point removal part 4-4. Then, an automatic carrier phase controller (CAPC) 4-18 performs phase matching on the output signal of the AGC 4-17. Thereafter, a determination circuit (DEC) 4-19 performs signal determination on the output signal of the CAPC 4-18 and outputs the result of the determination to the vector difference circuit 4-7.

The vector difference circuit 4-7 performs vector difference calculation that is an operation reverse to the vector sum calculation performed by the vector sum circuit 4-6, which transmits the natural binary code signal. Thereafter, the vector difference circuit 4-7 converts the signal back into Gray binary code and transmits the converted signal to a descrambler (P/S·DSCR) 4-20. The descrambler 4-20 performs descrambling, that is, converts this parallel Gray binary code signal into a serial signal and outputs the serial signal as a reception signal (RD).

Further, a transmission clock (TX-CLK) distribution circuit 4-21 of the transmission part 40 distributes a transmission clock signal to the zero point insertion part 4-2, the D/A converter circuit 4-10, and other transmission circuit parts. The reception clock distribution part 4-3 extracts the reception clock from the PLL circuit 4-16 and distributes the reception clock signal to the zero point removal part 4-4 and other reception circuit parts.

The reception clock distribution part 4-3 simply passes the sampling timing signal extracted from the PLL circuit 4-16 and showing the phase of the zero points. This signal is only a symbol timing signal.

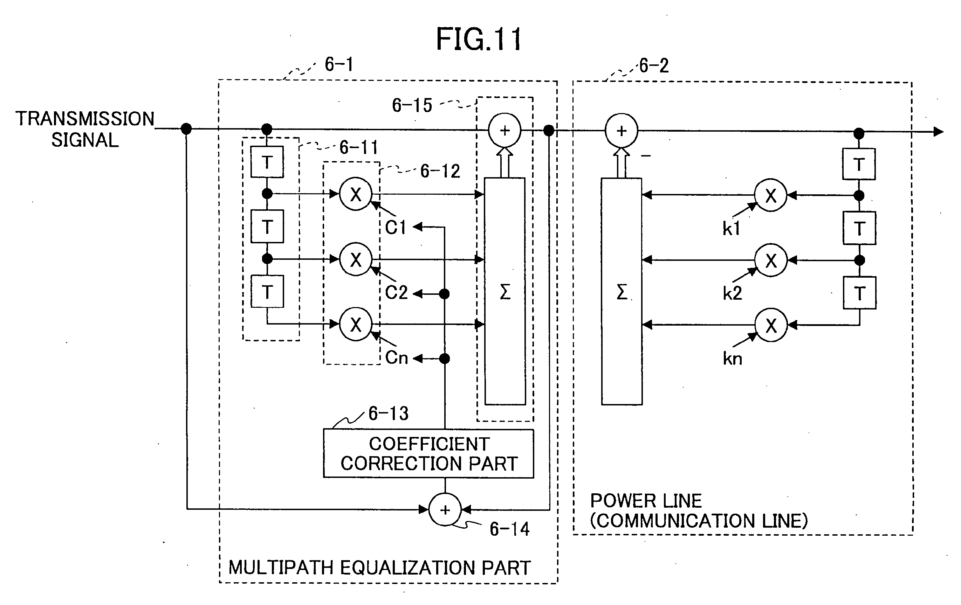

Next, a description will be given of a second embodiment of the present invention. FIG. 11 is a diagram for illustrating the second embodiment, in which reflected waves are cancelled by multipath equalization.

According to this embodiment, in a modem inside a pole transformer, a transmission signal is transmitted to a communication line 6-2 of a power line through a multipath equalization part 6-1. As previously described with reference to FIG. 2, n reflected waves are reflected and returned from numerous branch points, after respective delay times pass, to be combined in the communication line 6-2. Therefore, the transfer function of the communication line 6-2 is:

$$1/(1 + k_1 \times Z^{-1} + k_2 \times Z^{-2} + \cdots + k_n \times Z^{-n})$$

In order to cancel the reflected waves, the multipath equalization part 6-1, which is composed of a filter having a transfer function that is an inverse function to the transfer function of the communication line 6-2, is provided in the modem. That is, employed as the filter of the multipath equalization part 6-1 is a finite impulse response (FIR) filter whose transfer function is:

$$1 + C_1 \times Z^{-1} + C_2 \times Z^{-2} + \cdots + C_n \times Z^{-n}$$

The multipath equalization part 6-1 includes n delay elements 6-11 corresponding to the estimated maximum delay times of the respective reflected waves, n multipliers 6-12 multiplying the outputs of the delay elements 6-11 by respective coefficients, a coefficient correction part 6-13 calculating each of the coefficients by least mean square (LMS) and correcting the coefficients, an error calculation part 6-14 comparing an input transmission signal and an output transmission signal and outputs an error between the two signals to the coefficient correction part 6-13 as an error signal, and a combination and addition part 6-15 combining and adding signals obtained by multiplying the outputs of the delay elements 6-11 by the respective coefficients.

The coefficient correction part 6-13 calculates and corrects the coefficients $C_1$ through $C_n$ so that the error signal output from the error calculation part 6-14 is minimized. Thereby, the coefficients $k_1$ through $k_n$ equal the coefficients $C_1$ through $C_n$, respectively, so that the transfer function of the entire transmission system combining the multipath equalization part 6-1 and the communication line 6-2 of the power line becomes one. Therefore, there exists no resonance point at which the impedance becomes zero, thus preventing generation of strong leakage electromagnetic field waves.

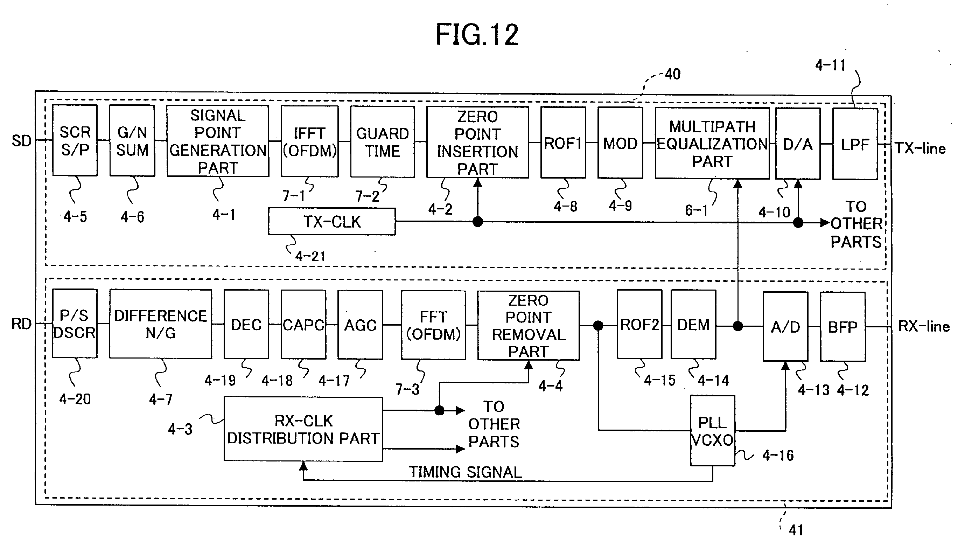

FIG. 12 is a block diagram showing a configuration of the modem in the pole transformer according to the second embodiment of the present invention. The modem transmits impulses at intervals corresponding to impulse response intervals and cancels the reflected waves of the transmitted impulses. The configuration of FIG. 12 is different from that of FIG. 9 in that the multipath equalization part 6-1 and an inverse fast Fourier transform part (IFFT) 7-1 and a guard time addition part 7-2 for performing OFDM are added to the transmission part 40, and that a fast Fourier transform part 7-3 for performing demultiplexing on an OFDM-multiplexed signal is provided in the reception part 41.

As shown in FIG. 11, the multipath equalization part 6-1 compares the signal received through a reception line and the output transmission signal, and calculates the coefficients of the FIR filter based on the signal of the error between the two signals so that the transfer function of the FIR filter is an inverse function to the transfer function of the multipath power line, thereby eliminating multipath effects.

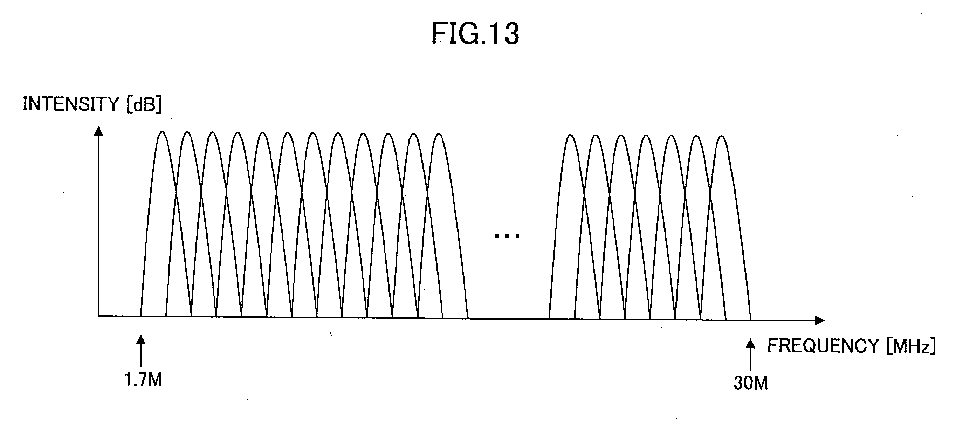

According to OFDM, a transmission signal in which digital modulated waves of multiple orthogonal carrier frequencies at minimum frequency intervals as shown in FIG. 13 are synchronously multiplexed is continuously transmitted. Since a multi-carrier modulated signal is employed in OFDM, a symbol period can be longer in OFDM than in the case of transmission by a single carrier wave. Further, by adding guard intervals between the transmission signals along the time axis by the guard time addition part 7-2, intersymbol interference is reduced even with multiple paths. Therefore, deterioration of the transmission characteristic can be minimized and the effects of ghosting can be suppressed.

Addition of guard intervals elongates the symbol length by the amount of the guard interval determined based on an estimated delay time of the multipath wave without changing the frequency intervals of subchannels. The reception part 41 of FIG. 12 ignores the symbol data of the guard time addition part 7-2 which symbol data is expected to be affected by intersymbol interference by the multiple path, and demodulates OFDM data by using the remaining symbol data.

As described above, according to the present invention, the signal points of a transmission signal are generated at intervals each corresponding to the waveform width of the impulse response of the communication line of a power line, and the impulses of the transmission signal are transmitted according to the Nyquist theorem with zero points being inserted between the impulses. Thus, by transmitting signals at the impulse intervals so as to avoid interference by reflected waves and intersymbol interference, generation of large leakage electromagnetic fields due to such interference can be prevented.

Further, by transmitting a signal by transmitting, immediately after a first impulse is transmitted, a second impulse whose phase is 180° different from that of the first impulse, the reflected waves of the first and second impulses have opposite polarities to cancel each other, thereby suppressing the leakage electromagnetic fields.

Furthermore, by providing a multipath equalization part having a characteristic reverse to the transmission characteristic of the communication line of the power line in the output side of a transmission apparatus and transmitting the transmission signal through the multipath equalization part, the reflected waves are cancelled so that generation of large leakage electromagnetic fields due to the interference by the reflected waves can be prevented.

The present invention is not limited to the specifically disclosed embodiments, but variations and modifications may be made without departing from the scope of the present invention.

The present application is based on Japanese priority application No. 2002-015098 filed on January 24, 2002, the entire contents of which are hereby incorporated by reference.

**Claims**

1. A method of suppressing leakage electromagnetic fields on a communication line or a power line having reflected waves generated thereon, the method comprising the steps of:

    (a) transmitting a first impulse from a transmission end; and
    (b) transmitting a second impulse from the transmission end after passage of a given period of time during which a reflected wave of the first impulse disappears before returning to the transmission end,

        whereby the leakage electromagnetic fields are minimized.

2. The method as claimed in claim 1, wherein the given period of time has a time length long enough for the reflected wave of the first impulse to disappear.

3. A method of suppressing leakage electromagnetic fields on a communication line or'a power line having reflected waves generated thereon, the method comprising the steps of:

    (a) transmitting a first impulse; and
    (b) transmitting a second impulse having a phase 180° different from that of the first impulse immediately after the first impulse is transmitted in said step (a),

        whereby a signal is transmitted.

4. A transmission method suppressing leakage electromagnetic fields in power line communication transmitting a signal by using a power line, wherein first and second impulse signals are transmitted from a transmission apparatus at a time interval of an impulse response waveform of the power line so as to prevent the second impulse signal and a reflected wave of the first impulse signal from being combined on the power line at an output end of the transmission apparatus, the second impulse signal corresponding to data to be transmitted next to that of the first impulse signal.

5. The transmission method as claimed in claim 4, wherein the time interval is substantially 2 μs.

6. The transmission method as claimed in claim 4, wherein the first and second impulse signals are generated at a Nyquist rate; and
    zero point signals are inserted at Nyquist interval positions between the first and second impulse signals and transmitted.

7. A transmission method suppressing leakage electromagnetic fields in power line communication transmitting a signal by using a power line, wherein the signal is transmitted from a transmission apparatus to the power line through a filter having a transfer function that is an inverse function to a transfer function of the power line so as to prevent the transmitted signal and reflected waves thereof from being combined on the power line at an output end of the transmission apparatus.

8. The transmission method as claimed in claim 7, wherein first and second impulse signals are transmitted from the transmission apparatus at a time interval of an impulse response waveform of the power line so as to prevent the second impulse signal and a reflected wave of the first impulse signal from being combined on the power line at the output end of the transmission apparatus, the second impulse signal corresponding to data to be transmitted next to that of the first impulse signal.

9. The transmission method as claimed in claim 8, wherein the time interval is substantially 2 µs.

10. The transmission method as claimed in claim 8, wherein the first and second impulse signals are generated at a Nyquist rate; and
    zero point signals are inserted at Nyquist interval positions between the first and second impulse signals and transmitted.

11. A transmission apparatus suppressing leakage electromagnetic fields in power line communication transmitting a signal by using a power line, the transmission apparatus comprising:

    a signal generation part generating and transmitting first and second impulse signals at a time interval of an impulse response waveform of the power line so as to prevent the second impulse signal and a reflected wave of the first impulse signal from being combined on the power line at an output end of the transmission apparatus, the second impulse signal corresponding to data to be transmitted next to that of the first impulse signal.

12. The transmission apparatus as claimed in claim 11, wherein the time interval is substantially 2 µs.

13. The transmission apparatus as claimed in claim 11, wherein said signal generation part generates the first and second impulse signals at a Nyquist rate, inserts zero point signals at Nyquist interval positions between the first and second impulse signals, and transmits the zero point signals.

14. A transmission apparatus suppressing leakage electromagnetic fields in power line communication transmitting a signal by using a power line, the transmission apparatus comprising:

    a filter having a transfer function that is an inverse function to a transfer function of the power line so as to prevent the transmitted signal and reflected waves thereof from being combined on the power line at an output end of the transmission apparatus,

    wherein the signal is transmitted from the transmission apparatus to the power line through said filter.

15. The transmission apparatus as claimed in claim 14, further comprising a signal generation part generating and transmitting first and second impulse signals at a time interval of an impulse response waveform of the power line so as to prevent the second impulse signal and a reflected wave of the first impulse signal from being combined on the power line at the output end of the transmission apparatus, the second impulse signal corresponding to data to be transmitted next to that of the first impulse signal.

16. The transmission apparatus as claimed in claim 15, wherein the time interval is substantially 2 µs.

17. The transmission apparatus as claimed in claim 15, wherein said signal generation part generates the first and second impulse signals at a Nyquist rate, and inserts zero point signals at Nyquist interval positions between the first and second impulse signals, and transmits the zero point signals.

# FIG.1

9-1 DISTRIBUTION
SUBSTATION

HIGHT-VOLTAGE
DISTRIBUTION LINE

9-2

9-3

POLE
TRANSFORMER

ACCESS
NODE

9-11

9-4

LOW-VOLTAGE
DISTRIBUTION
LINE

9-5 LEAD-IN LINE

9-6

WHM

9-7

IN-HOUSE
LINE

# FIG.2

EP 1 333 593 A1

# FIG.3A

R
L
MODEM OUTPUT IMPEDANCE
DISTRIBUTION LINE
TRANSMISSION PART
C
LEAD-IN LINE
LCR SERIES RESONANCE → CURRENT-MAXIMIZING POINT

# FIG.3B

CURRENT

f0    FREQUENCY

IMPEDANCE

FIG.4A

30MHz

RESONANCE POINT : ZERO IMPEDANCE ⟹ MAXIMUM LEAKEAGE ELECTROMAGNETIC FIELDS

CURRENT

FIG.4B

FREQUENCY          30MHz

# FIG.5

VOLTAGE

CURRENT

$\lambda / 2$

30MHz : 5m
10MHz : 15m
1MHz : 150m

TIME

# FIG.6A

MAXIMUM  CURRENT

$+$

$-$

$\times$

T

k

# FIG.6B

PWR

FREQUENCY

1.7MHz

30MHz

## FIG.6C

TIME

## FIG.6D

2 μs    <u>NO INTERFERENCE</u>

TIME

# FIG.7

2 μs

33ns BAUD RATE (30 MBAUD)

INSERT ZERO POINT

66ns

TIME

EP 1 333 593 A1

# FIG.8

(a) 1ST IMPULSE

33ns

2 μs

(b) REFLECTED WAVE OF 1ST IMPULSE

(c) 2ND IMPULSE

(d) REFLECTED WAVE OF 2ND IMPULSE

(e) ON POWER LINE

(f) SEQUENTIAL TRANSMISSION

TIME

EP 1 333 593 A1

# FIG.9

EP 1 333 593 A1

FIG.10A

# FIG.10B

OUTPUT OF SIGNAL POINT
GENERATION PART

AMPLITUDE

REAL

TIME

AMPLITUDE

IMAGINARY

TIME

2 μ s

# FIG.10C

OUTPUT OF ROF1

AMPLITUDE

REAL

TIME

AMPLITUDE

IMAGINARY

TIME

EP 1 333 593 A1

# FIG.11

TRANSMISSION
SIGNAL

6-1

6-15

6-11

6-12

C1

C2

Cn

Σ

6-13

COEFFICIENT
CORRECTION PART

6-14

MULTIPATH EQUALIZATION PART

6-2

k1

k2

kn

Σ

POWER LINE
(COMMUNICATION LINE)

EP 1 333 593 A1

# FIG.12

SD

| SCR S/P | G/N SUM | SIGNAL POINT GENERATION PART | IFFT (OFDM) | GUARD TIME | ZERO POINT INSERTION PART | ROF1 | MOD | MULTIPATH EQUALIZATION PART | D/A | LPF |

TX-line

40

4-11

4-5    4-6    4-1

7-1    7-2

4-2

4-8    4-9

6-1

4-10

TX-CLK

4-21

TO OTHER PARTS

RD

| P/S DSCR | DIFFERENCE N/G | DEC | CAPC | AGC | FFT (OFDM) | ZERO POINT REMOVAL PART | ROF2 | DEM | A/D | BFP |

RX-line

4-20    4-7

4-19    4-18    4-17

7-3

4-4

4-15    4-14

4-13    4-12

4-3

RX-CLK DISTRIBUTION PART

TO OTHER PARTS

PLL VCXO

4-16

TIMING SIGNAL

41

EP 1 333 593 A1

# FIG.13

INTENSITY [dB]

FREQUENCY [MHz]

1.7M

30M

EP 1 333 593 A1

**European Patent Office**

**EUROPEAN SEARCH REPORT**

Application Number

EP 02 01 0113

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 185 591 A (SHUEY KENNETH C) 9 February 1993 (1993-02-09) * column 1, line 33 - line 49 * * column 4, line 3 - line 60 * * column 5, line 29 - column 6, line 36 * --- | 1-17 | H04B3/54 |
| A | US 5 581 256 A (MCEWAN THOMAS E) 3 December 1996 (1996-12-03) * column 2, line 1 - line 30 * * column 2, line 39 - line 61 * * column 6, line 46 - line 58 * ----- | 1-17 | |

TECHNICAL FIELDS SEARCHED (Int.Cl.7)

H04B

The present search report has been drawn up for all claims

| Place of search | Date of completion of the search | Examiner |
|---|---|---|
| THE HAGUE | 16 June 2003 | De Iulis, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 333 593 A1**

**ANNEX TO THE EUROPEAN SEARCH REPORT
ON EUROPEAN PATENT APPLICATION NO.**            EP 02 01 0113

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2003

| Patent document cited in search report | | Publication date | Patent family member(s) | | Publication date |
|---|---|---|---|---|---|
| US 5185591 | A | 09-02-1993 | AU | 648171 B2 | 14-04-1994 |
| | | | AU | 1712992 A | 14-01-1993 |
| | | | DE | 69225229 D1 | 28-05-1998 |
| | | | DE | 69225229 T2 | 08-10-1998 |
| | | | DK | 594755 T3 | 08-03-1999 |
| | | | EP | 0594755 A1 | 04-05-1994 |
| | | | ES | 2118136 T3 | 16-09-1998 |
| | | | FI | 940119 A | 03-03-1994 |
| | | | HU | 68072 A2 | 13-03-1995 |
| | | | NO | 940083 A | 18-02-1994 |
| | | | WO | 9301660 A1 | 21-01-1993 |
| US 5581256 | A | 03-12-1996 | US | 5521600 A | 28-05-1996 |
| | | | AU | 6145796 A | 24-12-1996 |
| | | | CA | 2224117 A1 | 12-12-1996 |
| | | | EP | 0830618 A1 | 25-03-1998 |
| | | | JP | 11506824 T | 15-06-1999 |
| | | | WO | 9639640 A1 | 12-12-1996 |
| | | | AT | 227851 T | 15-11-2002 |
| | | | AU | 692921 B2 | 18-06-1998 |
| | | | AU | 3462395 A | 27-03-1996 |
| | | | CA | 2199121 A1 | 14-03-1996 |
| | | | CN | 1157657 A ,B | 20-08-1997 |
| | | | DE | 69528840 D1 | 19-12-2002 |
| | | | EP | 0779992 A1 | 25-06-1997 |
| | | | JP | 10505670 T | 02-06-1998 |
| | | | WO | 9607931 A1 | 14-03-1996 |
| | | | US | 5682164 A | 28-10-1997 |

EPO FORM P0459

For more details about this annex : see Official Journal of the European Patent Office, No. 12/82

25